(19) Europäisches Patentamt
European Patent Office
Office européen des brevets

(11) **EP 3 308 945 B1**

## (12) EUROPEAN PATENT SPECIFICATION

(45) Date of publication and mention
of the grant of the patent:
**27.12.2023   Bulletin 2023/52**

(21) Application number: **17195927.3**

(22) Date of filing: **11.10.2017**

(51) International Patent Classification (IPC):
*B29C 64/393* (2017.01)     *B29C 64/386* (2017.01)
*B29C 64/153* (2017.01)     *B29C 64/20* (2017.01)
*B33Y 10/00* (2015.01)     *B33Y 30/00* (2015.01)
*B33Y 50/02* (2015.01)     *B22F 12/90* (2021.01)
*B22F 10/85* (2021.01)     *B22F 10/38* (2021.01)
*B22F 10/37* (2021.01)     *B22F 10/36* (2021.01)
*B22F 10/28* (2021.01)     *B22F 3/105* (2006.01)
*B28B 1/00* (2006.01)     *B22F 12/67* (2021.01)

(52) Cooperative Patent Classification (CPC):
**B29C 64/153; B22F 10/28; B22F 10/36;**
**B22F 10/37; B22F 10/38; B22F 10/85; B22F 12/90;**
**B29C 64/20; B29C 64/386; B29C 64/393;**
**B33Y 10/00; B33Y 30/00; B33Y 50/02;** B22F 12/67;
B28B 1/001;                                    (Cont.)

(54) **METHOD AND SYSTEM FOR TOPOGRAPHICAL BASED INSPECTION AND PROCESS CONTROL FOR ADDITIVE MANUFACTURED PARTS**

VERFAHREN UND SYSTEM ZUR TOPOGRAPHISCH BASIERTEN INSPEKTIONS- UND PROZESSSTEUERUNG FÜR GENERATIV GEFERTIGTE TEILE

PROCÉDÉ ET SYSTÈME D'INSPECTION FONDÉE SUR LA TOPOGRAPHIE ET DE COMMANDE DE PROCESSUS POUR DES PIÈCES FABRIQUÉES PAR FABRICATION ADDITIVE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:   **11.10.2016   US 201615290067**

(43) Date of publication of application:
**18.04.2018   Bulletin 2018/16**

(73) Proprietor: **General Electric Technology GmbH**
**5400 Baden (CH)**

(72) Inventors:
• **DEHGHANNIRI, Ehsan**
  **Schenectady, NY 12345-6000 (US)**
• **LOCHNER, Christopher Joseph**
  **Schenectady, NY 12345 (US)**
• **LUO, Kevin**
  **Schenectady, NY 12345 (US)**

(74) Representative: **Novagraaf Group**
**Chemin de l'Echo 3**
**1213 Onex / Geneva (CH)**

(56) References cited:
**EP-A1- 2 918 395        US-A1- 2015 174 658**
**US-A1- 2015 352 781**

• **TOWNSEND A ET AL: "Surface texture metrology for metal additive manufacturing: a review", PRECISION ENGINEERING, ELSEVIER, AMSTERDAM, NL, vol. 46, 7 June 2016 (2016-06-07), pages 34-47, XP029659308, ISSN: 0141-6359, DOI: 10.1016/J.PRECISIONENG.2016.06.001**

**(Cont. next page)**

(52) Cooperative Patent Classification (CPC): (Cont.)
Y02P 10/25

**Description**

BACKGROUND OF THE INVENTION

Additive manufacturing is a process by which a three-dimensional structure is built, usually in a series of layers, based on a digital model of the structure. The process is sometimes referred to as three-dimensional (3D) printing or 3D rapid prototyping, and the term "print" is often used even though some examples of the technology rely on sintering or melting/fusing by way of an energy source to form the structure, rather than "printing" in the traditional sense where material is deposited at select locations. Examples of additive manufacturing techniques include powder bed fusion, fused deposition modeling, electron beam melting (EBM), laminated object manufacturing, selective laser sintering (SLS), direct metal laser sintering (DMLS), direct metal laser melting (DMLM), selective laser melting (SLM), and stereolithography, among others. Although 3D printing technology is continually developing, the process to build a structure layer-by-layer is relatively slow, with some builds taking several days to complete.

One of the disadvantages of current additive manufacturing processing relates to quality assurance. There is typically some amount of analysis to determine whether the produced part meets the manufacturing thresholds and design criteria. In some examples, the part may have to be dissected in order to test whether a certain lot of products or a sampling has satisfied the design limits. This can lead to considerable inefficiency when, for example, it is later determined that a production lot is defective due to a machining or design problem.

EP 2 918 395 relates to additive manufacturing including layer-by-layer imaging.

BRIEF DESCRIPTION OF THE INVENTION

The invention is defined by the claims whereby claim 1 defines a method and claim 13 defines a system. According to an aspect, a method is provided for inspection of 3D manufactured parts or structures or process control of a 3D manufacturing apparatus. The method includes obtaining, in real-time during a 3D manufacturing build process in which at least one structure is built by the 3D manufacturing apparatus, a topographical scan of an area of a build platform on which the at least one structure is built. An evaluating step evaluates, by a processor, the topographical scan to determine a powder depth and/or a layer depth after powder redistribution. A determining step determines based on the evaluating, whether the powder depth or the layer depth is either inside or outside a predetermined range. A modifying step modifies, based on the determining, an operational characteristic of the 3D manufacturing apparatus. The topographical scan may be obtained by a laser scan, a blue light scan, a confocal scan or a multifocal plane microscopy scan. Furthermore the method comprises identifying a defect in at least one structure, correlating the defect with the powder layer or the layer depth, generating and updating a statistical model based on the correlation and generating the predetermined range from a distribution function of the statistical model.

According to another aspect, a system for inspection of 3D manufactured structures or process control of a 3D manufacturing apparatus has a memory and a processor in communication with the memory. The system is configured to perform an obtaining step that obtains with a topographic scanner, in real-time during a 3D manufacturing build process in which at least one structure is built by the 3D manufacturing apparatus, a topographical scan of an area of a build platform on which the at least one structure is built. An evaluating step evaluates, by a processor, the topographical scan to determine a powder depth and/or a layer depth after powder redistribution. A determining step determines, based on the evaluating, whether the powder depth and/or the layer depth is either inside or outside a predetermined range. A modifying step modifies, based on the determining, an operational characteristic of the 3D manufacturing apparatus Furthermore the system is configured to identifying a defect in at least one structure, correlating the defect with the powder layer or the layer depth, generating and updating a statistical model based on the correlation and generating the predetermined range from a distribution function of the statistical model.

According to a further aspect, a computer program product for inspection of 3D manufactured structures or process control of a 3D manufacturing apparatus includes a non-transitory computer readable storage medium readable by a processor and storing instructions for execution by the process to perform a method. The method includes an obtaining step for obtaining, in real-time during a 3D manufacturing build process in which at least one structure is built by the 3D manufacturing apparatus, a topographical scan of an area of a build platform on which the at least one structure is built. An evaluating step evaluates, by a processor, the topographical scan to determine a powder depth or a layer depth after powder redistribution. A determining step determines, based on the evaluating, whether the powder depth or the layer depth is either inside or outside a predetermined range. A modifying step modifies, based on the determining, an operational characteristic of the 3D manufacturing apparatus.

Additional features and advantages are realized through the concepts of aspects of the present invention. Other embodiments and aspects of the invention are described in detail herein.

BRIEF DESCRIPTION OF THE DRAWINGS

The invention is defined by the claims. The foregoing and other objects, features, and advantages of the invention are apparent from the following detailed description taken in conjunction with the accompanying drawings in which:

FIG. 1 illustrates a cross-sectional view of an additive manufacturing apparatus, in accordance with aspects described herein;

FIG. 2 illustrates a simplified view of a calibration block having known topographical features and defects such as half-sphere of different sizes, in accordance with aspects described herein;

FIG. 3 illustrates a cross-sectional view the additive manufacturing apparatus after powder redistribution is complete, in accordance with aspects described herein;

FIG. 4 illustrates a partial, cross-sectional and enlarged view of a structure/part being built and a powder layer after powder redistribution;

FIG. 5 illustrates a flowchart of a method for topographically scanning the part/structure during a build process, in accordance with aspects described herein;

FIG. 6 illustrates a flowchart of a method for generating a correlation database and physical and statistical models, in accordance with aspects described herein;

FIG. 7 illustrates a flowchart of a method for controlling the build process based on data in the correlation database, physical model and statistical model, and updating the database and models after building is complete, in accordance with aspects described herein;

FIG. 8 illustrates a schematic representation of the control system and the 3D printing apparatus, in accordance with aspects described herein;

FIG. 9 illustrates one example of a data processing system to incorporate and use one or more aspects described herein; and

FIG. 10 illustrates one example of a computer program product to incorporate one or more aspects described herein.

DETAILED DESCRIPTION OF THE INVENTION

The phrase "additive manufacturing apparatus" is used interchangeably herein with the phrase "printing apparatus" and term "printer", and the term "print" is used interchangeably herein with the word "build", referring to the action for building a structure by an additive manufacturing apparatus, regardless of the particular additive manufacturing technology being used to form the structure. As used herein, print and printing refer to the various forms of additive manufacturing and include three-dimensional (3D) printing or 3D rapid prototyping, as well as sintering or melting/fusing technologies. Examples of additive manufacturing or printing techniques include powder bed fusion, fused deposition modeling, electron beam melting (EBM), laminated object manufacturing, selective laser sintering (SLS), direct metal laser sintering (DMLS), direct metal laser melting (DMLM), selective laser melting (SLM), and stereolithography, among others.

Assurance that a build process is progressing as planned is important for cost and quality reasons. At the end of a build cycle to build one or more three-dimensional structures, an operator of the additive manufacturing apparatus may find that the parts are defective or unusable because of a failure with the additive manufacturing apparatus during the build cycle. This can be especially problematic when building expensive parts, such as molds for casting structures having complex geometries.

A topographic scanning system and method are disclosed herein that may be used to monitor the building of layers of one or more objects being built by an additive manufacturing apparatus, and, in one embodiment, to detect operational flaws as they occur, (i.e. during the build process rather than afterward), as an example. In a further embodiment, evaluation/analysis of scans acquired during the build process of previous parts is performed as part of post-processing (and not as part of the real-time acquisition of scanned data). Real-time acquisition as used herein refers to the scans of individual layer(s) of the structure as the structure is being built ("printed"). Real-time analysis refers to evaluation of the acquired scans of the various layers.

Operational flaws may include, as examples, errors with the structure(s), build process, powder depth outside desired range or additive manufacturing apparatus errors, or indicators that one or more errors are likely to occur with the structure(s), build process, or additive manufacturing apparatus, or lack of fusion, porosity or micro/macro cracks. In some embodiments, action(s) may be taken responsive to observing that an operational flaw has occurred. For instance, remedial actions may be taken so that the flaw can be corrected, the build process stopped, the problem fixed, a new build started, etc.

Provided is an ability to topographically observe a build process that may take hours or days to complete in order to detect and react to potential operational flaws with the additive manufacturing apparatus and/or errors with one or more printed layers. Also provided is the ability to communicate indications of the operational flaws to operators early in the build process as, or before, they occur, so that a failed build can be stopped prior to its completion. A new build may then be started earlier than it otherwise would have been (i.e. had the failure been discovered only after the failed build process completes). From a manufacturing resources perspective, wasted materials usage and wasted build time are reduced. In addition, as described below, rather than stopping an entire build process, printing of individual parts that are showing flaws or otherwise undesired features can be turned off so as the flaws/features do not cause the build to fail, which could cause errors with all of the structures in the build. By terminating building of individual parts that are becoming problematic, manufacturing yields and machine uptime can be maximized.

Some problems that may be observed during the monitoring of a build process as described herein include, but are not limited to, powder depth, dimensional errors, distortion, lack of fusion, porosity, micro cracking or macro cracking in the printed structures, malfunctioning of a roller/planarizer or other component of the printing apparatus, poor layer surface finish, delamination of the structures, misplacement, excess, or absence of build material, or any other additive manufacturing errors. In general, the monitoring can monitor for anything that can cause the built part to fail or that can indicate that that additive manufacturing apparatus has failed, is about to fail, or needs maintenance, as examples.

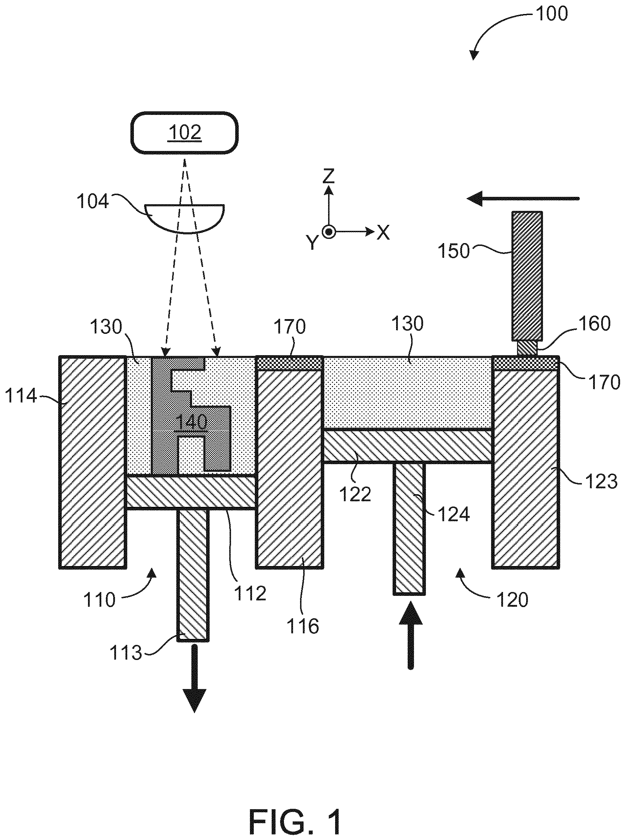

An example additive manufacturing apparatus and associated process in accordance with aspects described herein are presented with reference to FIGS. 1-3, in the context of printed parts. The parts in this example are built out of printed metallic, ferromagnetic material, or non-metallic (plastic) though other materials are possible.

In one example, the printing apparatus prints the structures in layers. For the first layer, a recoating blade moves across a build platform and powder is pushed onto the build platform in a desired thickness. A light source (or laser) with an appropriate wavelength is then passed over the portion that is to be printed, thereby fusing it in place. After this layer is complete, the build platform lowers a distance that is equal to the layer thickness of the build (this is usually predetermined by the operator of the system), and the new powder stock platform rises by a predetermined amount. Then, the recoating blade moves across the build platform and more powder is pushed onto the build platform. The light source passes over selected regions to fuse the next layer of the part, and this cycle continues until the part is finished.

One potential challenge in the above process is flaws in the printed structure. If there are errors in printing - for instance lack of fusion, porosity, or cracks, as examples - then the printed structure may not function as intended in its downstream application. By way of some examples, lack of fusion or porosity may be the result of insufficient laser power, a laser speed that is too fast, or a recoating powder layer that is too thick or too thin. The lack of fusion or porosity may be hard or impossible to see with the naked eye, as these defects may be below the surface of the part layer. However, these defects can cause the parts to fail design specifications, and result in significant losses in production yields and production time (clean up, refixturing, etc.). The above problems and others may lead to manufacturing failures that may be extremely expensive, for instance when they cause defects in expensive parts.

According to aspects described herein, a topographic scanning system is leveraged for monitoring of build quality and machine health, and modifying machine operating characteristics during an additive manufacturing process to build a structure, so that the quality of the structure being built and the health of the additive manufacturing apparatus can be assessed. Aspects of the monitoring and analyzing can be performed in real-time, e.g. during the build process, and in non-real-time. The monitoring includes, in some embodiments, obtaining topographic scans of the build during the build process (real-time acquisition of images of the build process). The method and system also include evaluating data from previously made parts and a correlation database. The correlation database correlates defect locations with part locations and specific powder depths. The topographic scanning may include, for instance, scans of area(s) of the build platform, including the individual layers of the structure(s) as the layers are being built, scans of one or more additive manufacturing apparatus components, etc., as examples, and scans of the build platform after powder redistribution. An assessment of part quality may then be performed by evaluating the scan data. For instance, the scan data may be evaluated to ascertain characteristics (e.g. powder depth) of the structure(s) being printed and compare these to a 'golden standard', such as a computer-aided design (CAD) specification for the structure. The CAD specification may be a specification that the additive manufacturing apparatus uses in building the structure. The comparison can assess whether the structure is being built consistent with the CAD specification in order to identify possible distortions, deviations, or other flaws. The scan data may also be compared to physical or statistical models that correlate defect locations with powder depths, both before laser sintering and after laser sintering.

Since, build quality is dependent on machine and material performance, the evaluation of the scans can additionally identify features in the data that suggest problems with the additive manufacturing apparatus, such as, powder depth, lack of fusion, porosity or micro/macro cracks or other items that indicate a flaw. Thus, the data can be evaluated to not only detect errors in the structure(s) being built as they are printed, and assign a part 'health' score to the structure(s), but also monitor additive manufacturing apparatus health, indicating when the machine might require maintenance, adjustment or modification and identifying what is needed for that maintenance, adjustment or modification. In some examples, the evaluation is performed in real-time during the build process, though in other examples, the evaluation is performed at a later time.

When the evaluation of the scan data reveals a problem, one or more actions may be taken in response, and the types of actions may vary. For instance, an operator of the additive manufacturing apparatus may be notified of the problem. In some embodiments, an auditory or visual alarm or alert, or an electronic communication (i.e. text or email), is provided to the operator indicating that the flaw has occurred. Additionally or alternatively, adjustments or modifications may be made to the additive manufacturing process. The process may be halted for instance. In this regard, some errors may be not recoverable, necessitating shut down of the machine in order to allow for operator intervention. However, in some instances, such as if the error is exhibited only when building a particular part or row of parts, the process is modified but not halted altogether; instead, the process is optionally continued to a next phase, skipping the building of object(s) where the operational flaw(s) is/are exhibited. For instance, a 'bad row' of parts or problematic area of the build platform may be noted and the rest of the build may be completed. Noting the bad row may include notifying the operator of the bad row of parts. In further embodiments, the build process may be continued despite observing occurrence of an operational flaw, and, if the error occurs over a substantial area of the build platform or with a threshold number of parts, then the rest of the build may be halted.

Detection algorithms can be used in the evaluation of the acquired scan data in order to detect the built structure(s), compare them to CAD models, physical or statistical models, and identify distortions, deviations or flaws in the build structure(s). Early detection of operational flaws may reduce manufacturing time spent on failed part builds, reduce scrap, reduce raw materials usage, eliminate post inspection/quality evaluation and increase up time on additive manufacturing equipment, as examples.

FIG. 1 depicts one example of an additive manufacturing apparatus, in accordance with aspects described herein. As is seen in FIG. 1, printing apparatus 100 (or 3D manufacturing apparatus) is a powder bed fusion type of 3D printing device that includes a laser 102 and lens 104. A build section 110 is located adjacent to a dispensing section 120. The build section includes the build platform 112, onto which the structure 140 (e.g., the 3D printed part) is built. The build platform is connected to a shaft or support 113 that lowers the build platform in increments as the structure 140 is built. At the start of 3D printing, the build platform will be at a high position, and as each layer of the structure 140 is formed the build platform will lower accordingly. The build platform 112 or build section 110 is enclosed on the sides by walls 114 and 116 (additional walls may be used, but are not shown). The recoating blade 150 travels along the X-axis and the build platform 112 and dispensing platform travel along the Z-axis. The laser 102 traces various patterns along both the X and Y axes. The Y axis goes into and out of the page in FIG. 1.

The dispensing section 120 contains a supply of powder 130 supported by dispensing platform 122 and contained by walls 116 and 123. The dispensing platform 122 is raised up by shaft or support 124. When a new layer of powder is required in build section 110, the dispensing platform 122 will raise up by a predetermined amount so that recoating blade 150 can push the powder 130 from section 120 over to section 110. In this manner, a new layer of powder is spread over part/structure 140 so that the laser 102 may fuse the next layer of the part/structure 140. The recoating blade 150 will then return to its position above wall 123, and be ready for the next layer.

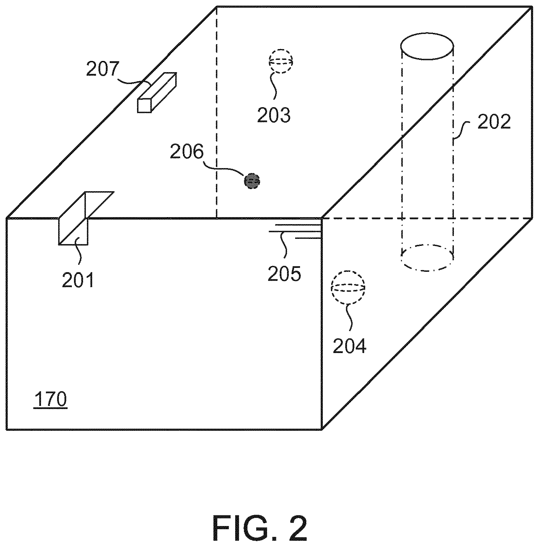

To monitor and assess operational performance of the 3D manufacturing apparatus 100, a topographic scanner 160 is provided to topographically scan the structure/part 140 each time it passes over the structure/part 140, and to topographically scan the build platform after powder redistribution is complete. The scanner 160 may comprise one or more of a laser scanner, a blue light scanner, a confocal scanner, a multifocal plane microscopy scanner or any other suitable topographical scanner. Calibration blocks 170 may be located on walls 123 and/or on walls 116, 114 (not shown) to calibrate the scanner 160 prior to a scan operation. The calibration block 170 may have different known artificial defects such as holes, notches, delamination, and voids that represent actual defects that can happen during the printing/build process. Referring to FIG. 2, a calibration block 170 is shown having various known defects. The known artificial defects may include a notch 201, hole 202, voids 203, 204, area of delamination 205, inclusion 206 and ridge 207.

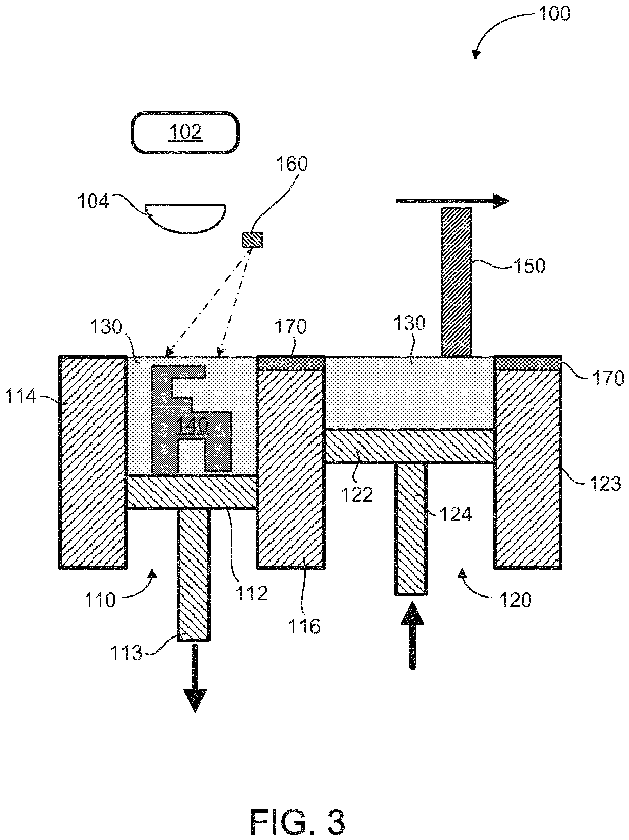

FIG. 3 illustrates the additive manufacturing apparatus after powder redistribution is complete. The scanner 160 is shown in an alternate location above the build platform, and it may be located at any suitable position as desired in the specific application. The topographic scanner 160 performs a first scan after the laser 102 is finished welding or fusing the current (i.e. top) layer of the part 140. The build platform 112 will lower, and the dispensing platform 122 raises. Powder 130 is pushed over the part 140 by recoating blade 150. A thin layer of powder 130 now exists over the structure/part 140 (as shown). After powder redistribution is complete a second topographic scan is performed by scanner 160. The depth of the powder can now be calculated by subtracting the first topographic scan from the second topographic scan (taking into consideration any change in height of the build platform).

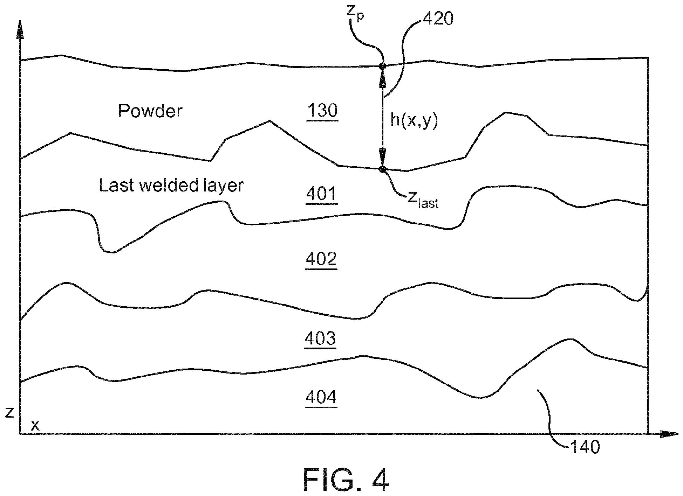

FIG. 4 illustrates a partial, cross-sectional schematic view of a structure/part being built and a powder layer after powder redistribution. The last (i.e., most recent) welded layer 401 is located at the top of the part, and previously welded (built) layers progress downwards as indicated by 402, 403 and 404. For example, layer 404 was welded by the laser before the upper layers. The powder 130 is located on top of layer 401, and this would be an example of the powder after redistribution. The powder depth 420 is indicated by h(x,y), as the height (h) (or powder depth) will vary over different X and Y locations. For example, the X direction is along the width of the build platform or part, and the Y direction (which is orthogonal to and in the same plane as the X direction) would be going into (or out of) the page in Fig. 4. The Z direction translates to the vertical height of the part, or it may also be viewed as the powder depth in the Z direction. The Z axis/direction is orthogonal to both the X and Y axes/directions. An equation that may be used to calculate the powder depth is:

$$h(x,y) = z_p(x,y) - z_{last}(x,y) \hspace{3cm} \text{(Equation 1)}$$

Where $h(x,y)$ is the powder depth at a specific x, y location, $z_p(x,y)$ is the powder height at the specific x, y location and $z_{last}(x,y)$ is the last welded/fused layer height at the specific x, y location.

These $h(x,y)$ powder depth values can be calculated for each layer during the build process. Areas having thicker powder depths may require greater laser power or slower laser speed, and areas with thinner powder depths may require less laser power or faster laser speed to obtain high quality weld/fuse results. For example, in regions with deeper powder levels a standard build process may result in areas of unfused powder and resulting defects. Powder depth for each layer and also the layer depth that can be calculated by differentiating two successive layers are can be stored and added to a database. For each structure layer, two values will be measured at each x and y location, and these values may be powder depth and layer depth. Data for multiple layers (e.g., every layer of the finished part) is combined and added to a database, and this database may contain data for a plurality of parts. Non-destructive testing of a sampling of parts may be performed to identify the location of any defects. The defects may be unfused regions, holes, cracks, undesired porosity, etc. These defect locations are then cross-referenced with the powder depth and/or layer depth data for the respective part, and the results are entered into a correlation database or model. The correlation database correlates defect locations with powder depth and/or layer depth. Two correlation databases or models are discussed below.

A physical model, including but not limited to the thermal domain, mechanical domain, and optical domain, is generated that can indicate correlation of powder depths and/or layer depths resulting in defects. For example, a powder depth greater than a certain amount (e.g., 10mm) may have a lower temperature gradient in the physical model that implies a high probability of creating a defect, or a powder depth lower than a certain amount (e.g., 2mm) may also have a high probability of creating a defect. This metaphysical numerical simulation of the physical phenomena includes the laser melting process, temperature gradient, and fluid mechanics of the melt during the build process and can be updated in real time using different measurement tools. In addition, specific regions of the structure/part may be more prone to defects than other regions based on part geometry. In these "problem" regions operational characteristics of the 3D manufacturing apparatus may need to be modified to reduce the occurrence of defects. The operational characteristics to be modified may include laser power, laser speed, powder size, powder material, chamber temperature, laser spot size or even powder depth.

A statistical model may also be generated from the same part/structure or different parts/structures that indicates the probability of defect free regions (or defect regions) based on powder depth and/or layer depth. A chart of powder depth versus defect free regions may take the form of a bell curve (i.e., a Gaussian distribution). The center point (or high point) of the bell curve indicates defect free probabilities (e.g., 90% to 100%), and indicates a medium or average powder depth. The extremes of the bell curve indicate smaller and larger powder depths, and have much lower defect free probabilities (e.g., 1% to 10%). If a specific location of the part has a power depth in one of these outlying regions (extremes of the bell curve), then a defect is highly possible, and the process (i.e., one or more of the operational characteristics) should either be modified (to correct the defect), or the build process for that part should be terminated (if the defect is uncorrectable). Also, during the build if the powder layer falls beyond the extremes a redistribution of powder can be applied to correct the powder depth anomalies.

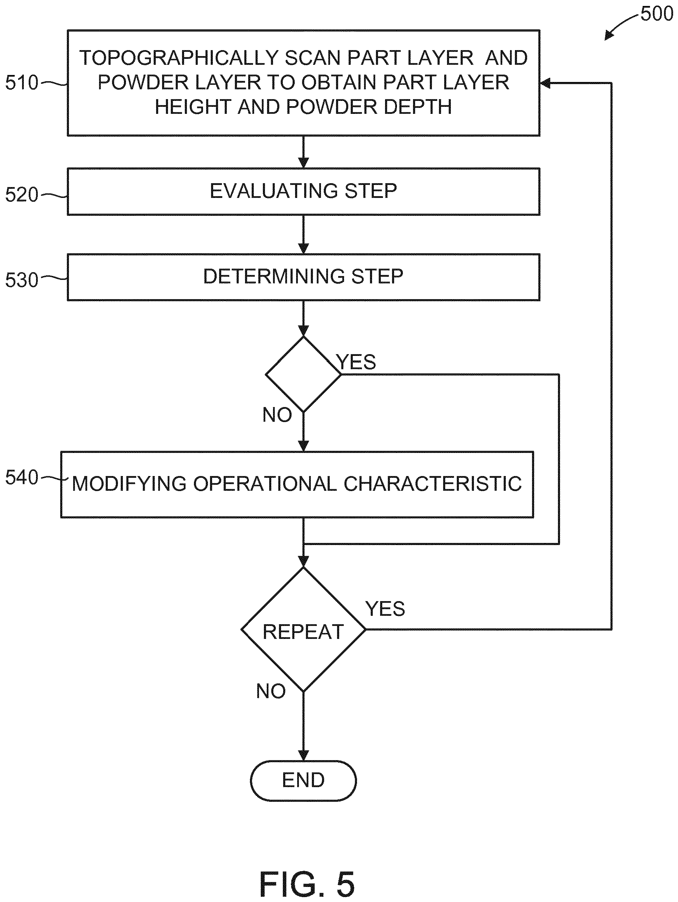

FIG. 5 illustrates a flowchart of a method 500 for topographically scanning the part/structure during a build process. An obtaining step 510 obtains a topographical scan of an area of a build platform on which the structure or part is built. This occurs in real-time during a 3D manufacturing build process in which the structure or part is built by the 3D manufacturing apparatus. The topographical scan may occur twice, as a first topographical scan is made of the last welded/fused surface of the part. Powder redistribution then takes place and when powder redistribution is finished a second topographical scan is performed of the powder surface (or build platform). The topographical scan may be obtained by a laser scan, structured light methods such as a structured blue light scan, a confocal scan, a multifocal plane microscopy scan or any other suitable topographic scanning method. An evaluating step 520 determines the powder depth by subtracting the first scan from the second scan. The build platform height must also be factored in. If the build platform height is the same for both scans, then powder depth calculation is made as described above. However, if the platform height changes between the two scans, then that difference will need to be factored in to the powder depth calculations. As one example only, if the build platform lowers by 50 $\mu$m after the first scan, then 50 $\mu$m would need to be added to the first scan values (or 50 $\mu$m would need to be subtracted from the second scan values). The evaluating step may be repeated for multiple locations on the build platform or for multiple part locations.

A determining step 530 determines, based on the evaluating step, whether the powder and/or layer depth is either inside or outside a predetermined range. For example, a desired powder depth may be between about 20 $\mu$m to about 100 $\mu$m, and an undesired powder depth is outside this range. Relative terms (e.g., about) are defined to have a tolerance of 10%. Based on this result a decision is made. If the powder depth is in the predetermined range (YES), then the process skips step 540. However, if the powder depth is outside the predetermined range (NO), then the process continues to step 540. A modifying step 540 modifies an operational characteristic of the 3D manufacturing apparatus based on the results of the determining step 530. As examples, if the powder depth is greater than the predetermined powder depth range, then the laser power may be increased, the laser speed may be decreased, the laser spot size may be changed, the powder may be redistributed, etc. Conversely, if the powder depth is lower than the predetermined range, then the laser power may be decreased, laser speed increased, etc. These modifications of the operational characteristic compensate or correct for the abnormal powder depths. Thicker powder levels may need more laser power or longer laser dwell time to properly fuse the powder. A thicker part/structure layer may need higher laser power in the next layer build process to correct the previously non-normal built layer. Accordingly, thinner powder levels may need the opposite, less laser power or faster dwell times. One or more operational characteristics may be modified as desired. The process then may be repeated until the build is complete.

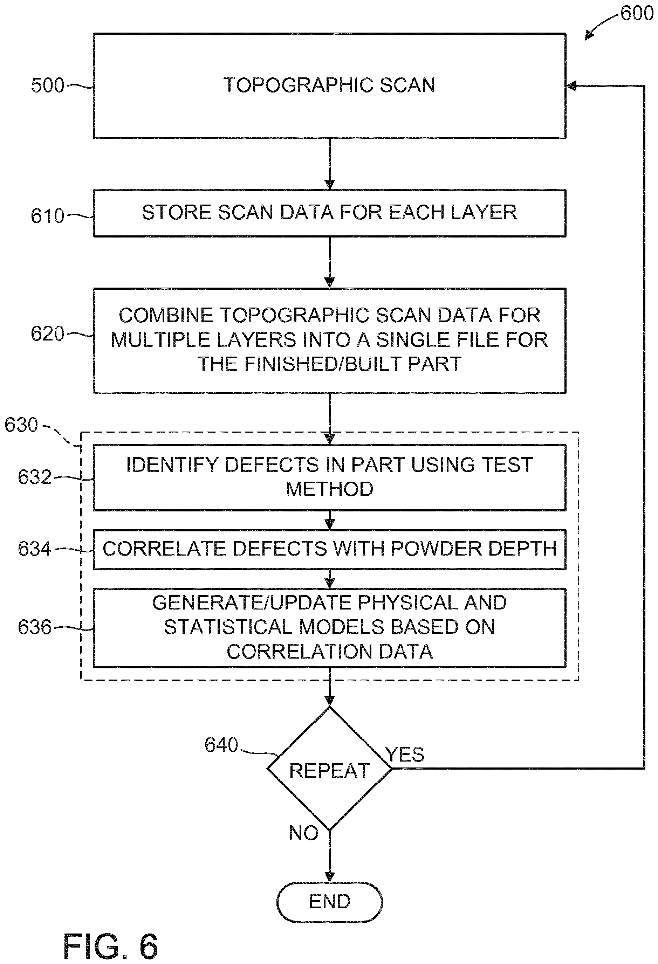

FIG. 6 illustrates a flowchart of a method 600 for generating a correlation database and physical and statistical models. The method 600 make take place at the same time as method 500 or afterwards. In step 610, topographic scan data for each layer is stored, and this includes the powder depth for multiple x, y locations. This may include multiple part data as multiple parts may be built at the same time on a single build platform. In step 620 the data for multiple layers of one part/structure is combined into a single file. This may be repeated for each part if multiple parts are being built simultaneously. In step 630 the data (e.g., powder depth and/or x, y locations) is correlated with defects. An identification step 632 identifies defects in the part/structure using a test method. Preferably, this test method is a non-destructive test method such as computerized tomography, ultrasonic testing, magnetic particle testing, radiographic testing or eddy current testing, or any other suitable non-destructive test method. However, the part may also be physically cut apart to detect if any defects are present. The test method will look for defects such as unfused regions, holes, cracks, undesired porosity or any other defect. In step 634, the defects are correlated with powder depth and/or layer depth or specific geometries of the part. As examples, a defect may be in an area that had a greater/larger than desired powder depth, or a certain part shape (e.g., a tight curve or small passageway) may be defective. In step 636, the correlation database and physical and statistical models are generated or updated to reflect this new correlation data. In step 640 the process may be repeated if desired, or it can simply end. The process could be repeated for multiple structures built by the 3D manufacturing apparatus, so that data from these parts is also added to the database/models.

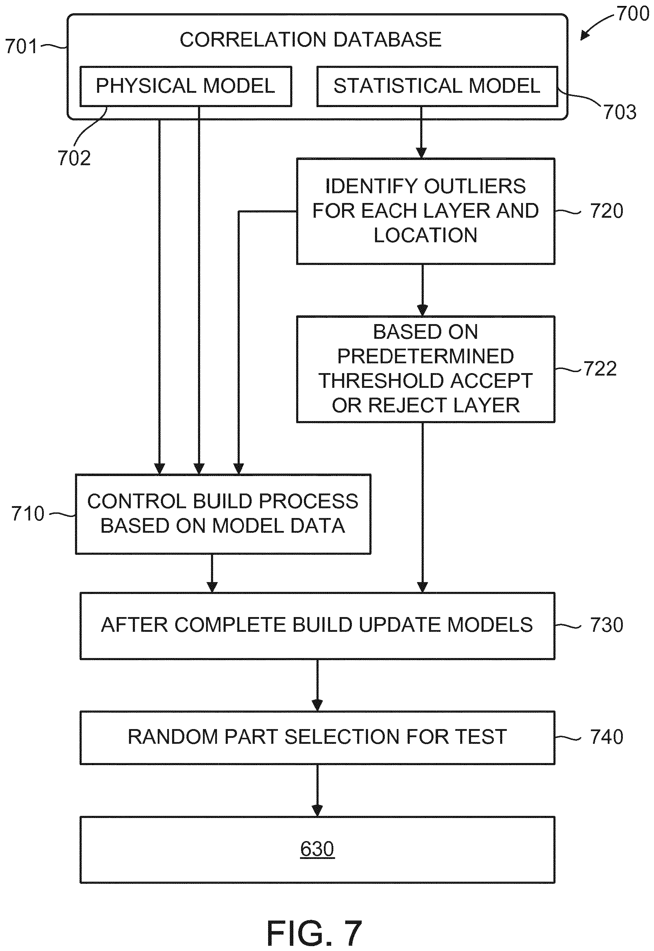

FIG. 7 illustrates a flowchart of a method 700 for controlling the build process based on data in the correlation database 701, physical model 702 and statistical model 703, and updating the database and models after building is complete. Data from the correlation database 701 and/or physical model 702 may be used to directly control the build process (in step 710) for one or more parts/structures, and this control was discussed with reference to FIG. 5. Briefly, operational characteristics of the 3D manufacturing apparatus are modified, if needed, based on specific powder depth values, topographical data and/or specific part geometry. The statistical model 703 may also be used to control the build process. In step 720, outliers are identified for each layer and location. Outliers are identified by being in the outer regions of a bell curve or any other distribution functions such as Pareto, Weibull, Gama, lognormal and exponential, as described previously. The locations of the part/structure that correspond to the outliers and used in step 710 to control and modify the build process if needed. In step 722 that current part layer may be accepted or rejected based on a predetermined statistical threshold. For example, if a certain percentage (e.g., > 30%) of locations are outside a central region of the bell curve, the layer (and/or part) may be rejected. After steps 710 and 722, step 730 updates the models 702, 703 and database 701 after the builds are complete. In step 740, random parts are selected for testing and are subjected to the method described in step 630 of FIG. 6.

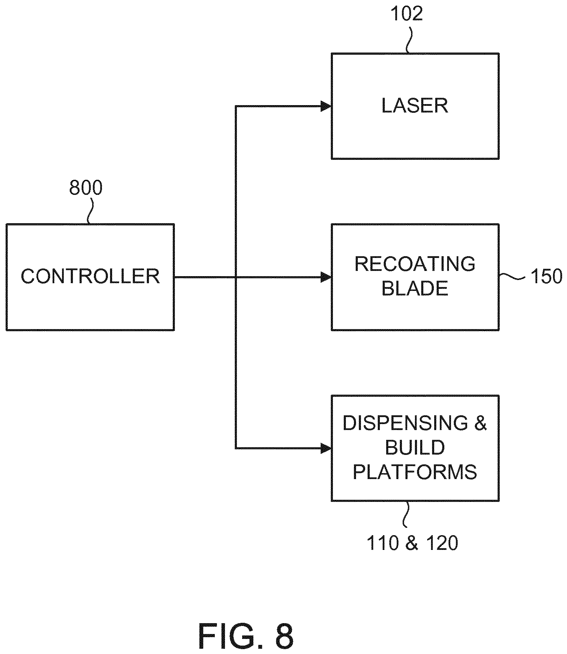

FIG. 8 illustrates a schematic representation of the control system and the 3D printing apparatus, in accordance with aspects described herein. Printing (or 3D manufacturing) apparatus 100 may include a control system including one or more controller(s) 800, including hardware and/or software for controlling functioning of some or all components of printing apparatus 100. Controller(s) 800 may control, for instance, operation of laser 102 (including laser power, laser speed, laser spot size, etc.), recoating blade position, speed or height, and dispensing and build platform operation (e.g.,

amount of height increase/decrease, etc.). In general, many operational characteristics of the apparatus may be controlled due to feedback obtained via scanner 160 and system 900, for example, laser power, laser speed, powder size, powder material, chamber temperature, laser spot size, or powder depth are a few examples of characteristics that can be modified as desired. In some embodiments, controller(s) 800 include one or more control data processing systems for controlling the print process and behavior of the other hardware of the printing apparatus. Control algorithms such as Proportional-Integral-Derivative (PID), Linear Quadratic Regulator (LQR), Fuzzy Logic Controller (FLC) and other suitable control algorithm can be used to calculate the multiple output parameters with respect to input data.

The scanner(s) 160 may capture data in real-time during the build process. The data may then be evaluated, in real time, in one example, using one or more algorithms executed as software on a data processing system. The data processing system may be included as part of the apparatus 100, in one example. In other examples, the data processing system is in wired or wireless communication with scanner 160 responsible for acquiring the scan data, where the scanner communicates the data through one or more wired or wireless communication paths to the data processing system. The separate data processing system may be a controller 800 data processing system described above, or may be a different data processing system dedicated to evaluation of the acquired scan data.

In any case, the data processing system that obtains the scan data may evaluate the data, either separately or by one or more of various techniques for comparison with one or more 3D CAD models, correlation databases, physical models and/or statistical models, to determine whether the structure(s) are being printed correctly. In a typical build setup, a designer of the structures to be printed may utilize software to build designs for all of the parts to be printed onto the build platform. Software for controlling the additive manufacturing apparatus may then (offline) 'slice' the 3D models of the structure(s) to be printed into layers, with each layer to be printed as a 'pass' of the laser.

As described herein, layers of a build process may be scanned and the properties and characteristics of the printed materials may be compared to a CAD specification in order to assess the quality of the build and determine whether operational flaw(s) have occurred. The scanning of one or more layers in real time during the additive manufacturing process, and the evaluation of the scan data, which may be in real-time during the build process or may be at a later time, provides online inspection and process monitoring that facilitates assessment of the operational health of the additive manufacturing apparatus.

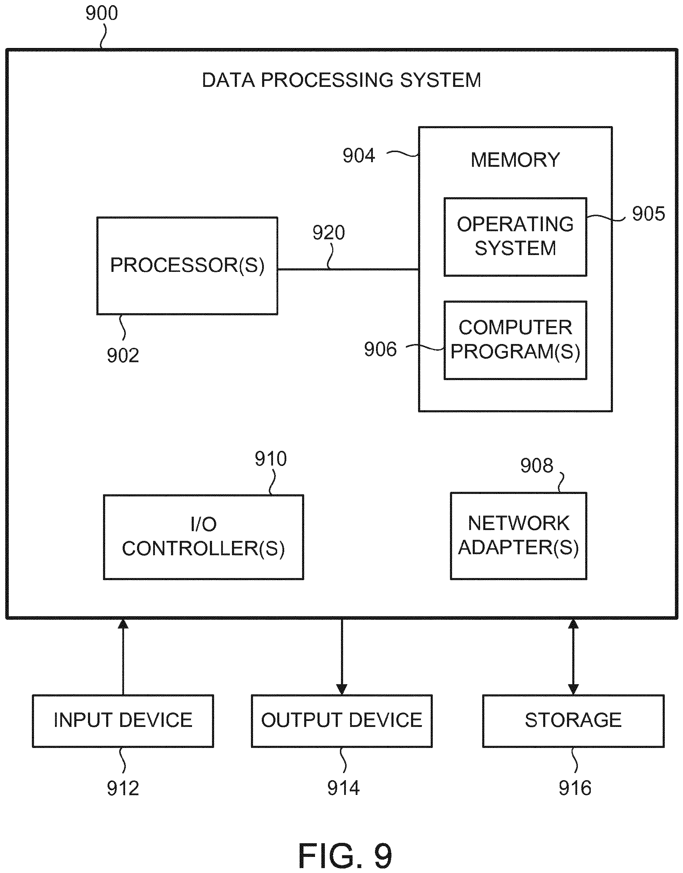

FIG. 9 illustrates one example of a data processing system to incorporate and use one or more aspects described herein. Data processing system 900 is suitable for storing and/or executing program code, such as program code for performing the processes described above, and includes at least one processor 902 coupled directly or indirectly to memory 904 through, a bus 920. In operation, processor(s) 902 obtain from memory 904 one or more instructions for execution by the processors. Memory 904 may include local memory employed during actual execution of the program code, bulk storage, and cache memories which provide temporary storage of at least some program code in order to reduce the number of times code must be retrieved from bulk storage during program code execution. A non-limiting list of examples of memory 904 includes a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. Memory 904 includes an operating system 905 and one or more computer programs 906, such as one or more programs for obtaining scan data from a scanner 160, and one or more programs for evaluating the obtained scan data to determine whether operational flaws(s) have occurred with an additive manufacturing apparatus, in accordance with aspects described herein.

Input/output (I/O) devices 912, 914 (including but not limited to keyboards, displays, pointing devices, etc.) may be coupled to the system either directly or through I/O controllers 910. Network adapters 908 may also be coupled to the system to enable the data processing system to become coupled to other data processing systems through intervening private or public networks. Modems, cable modem and Ethernet cards are just a few of the currently available types of network adapters 908. In one example, network adapters 908 and/or input devices 912 facilitate obtaining scan data of a build process in which a three-dimensional structure is printed.

Data processing system 900 may be coupled to storage 916 (e.g., a non-volatile storage area, such as magnetic disk drives, optical disk drives, a tape drive, cloud storage, etc.), having one or more databases. Storage 916 may include an internal storage device or an attached or network accessible storage. Computer programs in storage 916 may be loaded into memory 904 and executed by a processor 902 in a manner known in the art.

Additionally, data processing system 900 may be communicatively coupled to the scanner 160 via one or more communication paths, such as a network communication path, serial connection, or similar, for communicating data between data processing system 900 and the scanner. Communication may include acquisition by the data processing system of the data acquired by the scanner 160.

The data processing system 900 may include fewer components than illustrated, additional components not illustrated herein, or some combination of the components illustrated and additional components. Data processing system 900 may include any computing device known in the art, such as a mainframe, server, personal computer, workstation, laptop, handheld computer, tablet, smartphone, telephony device, network appliance, virtualization device, storage controller, etc. In addition, processes described above may be performed by multiple data processing systems 900, working as part of a clustered computing environment. Data processing system 900, memory 904 and/or storage 916 may include data compression algorithms specifically designed for 3D printing due to the large amount of data needed to be stored for each part.

The one or more computer readable medium(s), that are not part of the invention as claimed, may have embodied thereon computer readable program code. Various computer readable medium(s) or combinations thereof may be utilized. For instance, the computer readable medium(s) may comprise a computer readable storage medium, examples of which include (but are not limited to) one or more electronic, magnetic, optical, or semiconductor systems, apparatuses, or devices, or any suitable combination of the foregoing. Example computer readable storage medium(s) include, for instance: an electrical connection having one or more wires, a portable computer diskette, a hard disk or mass-storage device, a random access memory (RAM), read-only memory (ROM), and/or erasable-programmable read-only memory such as EPROM or flash memory, an optical fiber, a portable compact disc read-only memory (CD-ROM), an optical storage device, a magnetic storage device (including a tape device), or any suitable combination of the above. A computer readable storage medium is defined to comprise a tangible medium that can contain or store program code for use by or in connection with an instruction execution system, apparatus, or device, such as a processor. The program code stored in/on the computer readable medium therefore produces an article of manufacture (such as a "computer program product") including program code.

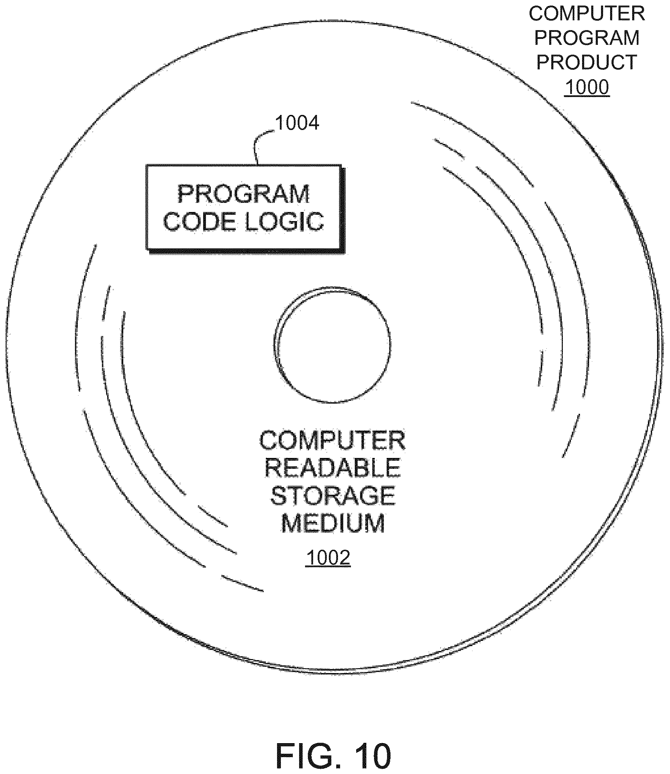

Referring now to FIG. 10, in one example, a computer program product 1000 includes, for instance, one or more computer readable media 1002 to store computer readable program code means or logic 1004 thereon to provide and facilitate one or more aspects of the present invention. Program code contained or stored in/on a computer readable medium 1002 can be obtained and executed by a data processing system (computer, computer system, etc. including a component thereof) and/or other devices to cause the data processing system, component thereof, and/or other device to behave/function in a particular manner. The program code can be transmitted using any appropriate medium, including (but not limited to) wireless, wireline, optical fiber, and/or radio-frequency. Program code for carrying out operations to perform, achieve, or facilitate aspects of the present invention may be written in one or more programming languages. In some embodiments, the programming language(s) include object-oriented and/or procedural programming languages such as C, C++, C#, Java, etc. Program code may execute entirely on the user's computer, entirely remote from the user's computer, or a combination of partly on the user's computer and partly on a remote computer. In some embodiments, a user's computer and a remote computer are in communication via a network such as a local area network (LAN) or a wide area network (WAN), and/or via an external computer (for example, through the Internet using an Internet Service Provider).

In one example, program code includes one or more program instructions obtained for execution by one or more processors. Computer program instructions may be provided to one or more processors of, e.g., one or more data processing system, to produce a machine, such that the program instructions, when executed by the one or more processors, perform, achieve, or facilitate aspects of the present invention, such as actions or functions described in flowcharts and/or block diagrams described herein. Thus, each block, or combinations of blocks, of the flowchart illustrations and/or block diagrams depicted and described herein can be implemented, in some embodiments, by computer program instructions.

The flowcharts and block diagrams depicted and described with reference to the Figures illustrate the architecture, functionality, and operation of possible embodiments of systems, methods and/or computer program products according to aspects of the present invention. These flowchart illustrations and/or block diagrams could, therefore, be of methods, apparatuses (systems), and/or computer program products according to aspects of the present invention.

In some embodiments, as noted above, each block in a flowchart or block diagram may represent a module, segment, or portion of code, which comprises one or more executable instructions for implementing the specified behaviors and/or logical functions of the block. Those having ordinary skill in the art will appreciate that behaviors/functions specified or performed by a block may occur in a different order than depicted and/or described, or may occur simultaneous to, or partially/wholly concurrent with, one or more other blocks. Two blocks shown in succession may, in fact, be executed substantially concurrently, or the blocks may sometimes be executed in the reverse order. Additionally, each block of the block diagrams and/or flowchart illustrations, and combinations of blocks in the block diagrams and/or flowchart illustrations, can be implemented wholly by special-purpose hardware-based systems, or in combination with computer instructions, that perform the behaviors/functions specified by a block or entire block diagram or flowchart.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprise" (and any form of comprise, such as "comprises" and "comprising"), "have" (and any form of have, such as "has" and "having"), "include" (and any form of include, such as "includes" and "including"), and "contain" (and any form contain, such as "contains" and "containing") are open-ended linking verbs. As a result, a method or device that "comprises", "has", "includes" or "contains" one or more steps or elements possesses those one or more steps or elements, but is not limited to possessing only those one or more steps or elements. Likewise, a step of a method or an element of a device that "comprises", "has", "includes" or "contains" one or more features possesses those one or more features, but is not limited to possessing only those one or more features. Furthermore, a device or structure that is configured in a certain way is configured in at least that way, but may also be configured in ways that are not listed. Additionally, the terms "determine" or "determining" as used herein can include, e.g. in situations where a processor performs the determining, performing one or more calculations or mathematical operations to obtain a result.

It is to be understood that the above description is intended to be illustrative, and not restrictive. While the dimensions and types of materials described herein are intended to define the parameters of the various embodiments, they are by no means limiting and are merely exemplary. Many other embodiments will be apparent to those of skill in the art upon reviewing the above description. The scope of the various embodiments should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects. It is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

The invention is not to be seen as limited by the foregoing description, but is only limited by the scope of the appended claims. This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims.

## Claims

1.  A method (500) for inspection of 3D manufactured structures (140) or process control of a 3D manufacturing apparatus (100), the method (500) comprising:

    obtaining (510), in real-time during a 3D manufacturing build process in which at least one structure (140) is built by the 3D manufacturing apparatus (100), a topographical scan of an area of a build platform (112) on which the at least one structure (140) is built;
    evaluating (520), by a processor (902), the topographical scan to determine a powder depth (420) or a layer depth after powder (130) redistribution;
    determining (530), based on the evaluating (520), whether the powder depth (420) or the layer depth is either inside or outside a predetermined range;
    modifying (540), based on the determining (530), an operational characteristic of the 3D manufacturing apparatus (100);

    wherein the method further comprises:

    identifying (632) a defect in at least one structure (140);
    correlating (634) the defect with the powder layer or the layer depth;
    generating or updating (636) a statistical model (703) based on the correlation; and
    generating the predetermined range from a distribution function of the statistical model.

2.  The method (500) of claim 1, wherein the obtaining step (510) further comprises:
    obtaining the topographical scan by one of, a laser scan, a blue light scan, a confocal scan or a multifocal plane microscopy scan (160).

3.  The method (500) of claim 2, wherein the obtaining step (510) further comprises:

    obtaining a first topographical scan of a surface of the at least one structure (140);
    waiting until powder redistribution is complete; and
    obtaining a second topographical scan of the build platform (112).

4. The method (500) of claim 3, the determining step (530) comprising:

   determining the powder depth (420) by subtracting a value of the first topographical scan from a value of the second topographical scan; and
   repeating the determining the powder depth (420) or the layer depth step for multiple locations on the build platform (112).

5. The method (500) of claim 4, further comprising:
   storing (610) multiple powder depth (420) or layer depth values for multiple X-Y locations on the build platform (112) for a single layer.

6. The method (500) of claim 5, wherein the storing step (610) is repeated for multiple layers.

7. The method (500) of claim 6, wherein data corresponding to multiple powder depth (420) values in multiple X-Y locations for multiple layers are combined and stored (620) into a database (701).

8. The method (500) of claim 7, wherein data from multiple structures (140) built by the 3D manufacturing apparatus (100) are added to the database (701).

9. The method (500) of claim 1, further comprising:

   using the statistical model to identify locations at which powder depth or layer depth is an outlier in the distribution function of the statistical model; and
   rejecting (722) the layer or part if the number of identified locations in the layer or part exceeds a statistical threshold.

10. The method (500) of claim 9, wherein a testing (630), identifying (632) and correlating (634) steps are performed for multiple structures (140), and the correlation results are added to a correlation database (701).

11. The method (500) of claim 9 or 10, the testing (630) performed by a non-destructive test method, the non-destructive test method comprising one of:
    ultrasonic testing, magnetic-particle testing, computerized tomography testing, radiographic testing, or eddy-current testing.

12. The method (500) of any one of claims 1 to 11, wherein the operational characteristic comprises at least one of:
    laser power, laser speed, powder size, powder material, chamber temperature, laser spot size, or powder depth (420).

13. A system (900) for inspection of 3D manufactured structures (140) or process control of a 3D manufacturing apparatus (100), the system (900) comprising:

    a memory (904); and
    a processor (902) in communication with the memory (904), wherein the system (900) is configured to perform:

       obtaining (510) with a topographic scanner (160), in real-time during a 3D manufacturing build process in which at least one structure (140) is built by the 3D manufacturing apparatus (100), a topographical scan of an area of a build platform (112) on which the at least one structure (140) is built;
       evaluating (520), by a processor (902), the topographical scan to determine a powder depth (420) or a layer depth after powder redistribution;
       determining (530), based on the evaluating (520), whether the powder depth (420) or the layer depth is either inside or outside a predetermined range;
       modifying (540), based on the determining (530), an operational characteristic of the 3D manufacturing apparatus (100);
       identifying (632) a defect in at least one structure (140);
       correlating (634) the defect with the powder layer or the layer depth;
       generating or updating (636) a statistical model based on the correlation; and
       generating (720) the predetermined range from a distribution function of the statistical model.

14. The system (900) of claim 13, the topographic scanner (160) comprising:

a laser scanner, a blue light scanner, a confocal scanner or a multifocal plane microscopy scanner (160).

15. The system (900) of claim 13 or 14, wherein the operational characteristic comprises at least one of:
laser power, laser speed, powder size, powder material, chamber temperature, laser spot size, or powder depth (420).

**Patentansprüche**

1. Verfahren (500) zum Kontrollieren von gefertigten 3D-Strukturen (140) oder Prozesssteuern einer 3D-Fertigungsvorrichtung (100), das Verfahren (500) umfassend:

Erhalten (510), in Echtzeit während eines 3D-Fertigungsbauprozesses, in dem mindestens eine Struktur (140) durch die 3D-Fertigungsvorrichtung (100) gebaut wird, einer topographischen Abtastung eines Bereichs einer Bauplattform (112), auf der die mindestens eine Struktur (140) gebaut wird;
Auswerten (520), durch einen Prozessor (902), der topographischen Abtastung, um eine Pulvertiefe (420) oder eine Schichttiefe nach einer Umverteilung von Pulver (130) zu bestimmen;
Bestimmen (530), basierend auf dem Auswerten (520), ob die Pulvertiefe (420) oder die Schichttiefe entweder innerhalb oder außerhalb eines vorbestimmten Bereichs liegt;
Modifizieren (540), basierend auf dem Bestimmen (530), einer Betriebseigenschaft der 3D-Fertigungsvorrichtung (100);
wobei das Verfahren ferner umfasst:

Identifizieren (632) eines Fehlers in mindestens einer Struktur (140);
Korrelieren (634) des Fehlers mit der Pulverschicht oder der Schichttiefe;
Erzeugen oder Aktualisieren (636) eines statistischen Modells (703) basierend auf der Korrelation; und
Erzeugen des vorbestimmten Bereichs aus einer Verteilungsfunktion des statistischen Modells.

2. Verfahren (500) nach Anspruch 1, wobei der Erhaltungsschritt (510) ferner umfasst:
Erhalten der topographischen Abtastung durch eine von einer Laserabtastung, einer Blaulichtabtastung, einer konfokalen Abtastung oder einer Multifokalebenenmikroskopieabtastung (160).

3. Verfahren (500) nach Anspruch 2, wobei der Erhaltungsschritt (510) ferner umfasst:

Erhalten einer ersten topographischen Abtastung einer Oberfläche der mindestens einen Struktur (140);
Warten, bis die Pulverumverteilung abgeschlossen ist; und
Erhalten einer zweiten topographischen Abtastung der Bauplattform (112).

4. Verfahren (500) nach Anspruch 3, der Bestimmungsschritt (530) umfassend: Bestimmen der Pulvertiefe (420) durch Subtrahieren eines Werts der ersten topographischen Abtastung von einem Wert der zweiten topographischen Abtastung; und
Wiederholen des Bestimmens der Pulvertiefe (420) oder des Schichttiefenschritts für mehrere Positionen auf der Bauplattform (112).

5. Verfahren (500) nach Anspruch 4, ferner umfassend:
Speichern (610) mehrerer Pulvertiefen- (420) oder Schichttiefenwerte für mehrere X-Y-Positionen auf der Bauplattform (112) für eine einzelne Schicht.

6. Verfahren (500) nach Anspruch 5, wobei der Speicherungsschritt (610) für mehrere Schichten wiederholt wird.

7. Verfahren (500) nach Anspruch 6, wobei Daten, die mehreren Werten der Pulvertiefe (420) in mehreren X-Y-Positionen für mehrere Schichten entsprechen, kombiniert und in eine Datenbank (701) gespeichert (620) werden.

8. Verfahren (500) nach Anspruch 7, wobei Daten aus mehreren Strukturen (140), die durch die 3D-Fertigungsvorrichtung (100) gebaut werden, der Datenbank (701) hinzugefügt werden.

9. Verfahren (500) nach Anspruch 1, ferner umfassend:

Verwenden des statistischen Modells, um Positionen zu identifizieren, bei denen die Pulvertiefe oder die Schichttiefe ein Ausreißer in der Verteilungsfunktion des statistischen Modells ist; und
Zurückweisen (722) der Schicht oder des Teils, falls die Anzahl der identifizierten Positionen in der Schicht oder dem Teil einen statistischen Schwellenwert überschreitet.

10. Verfahren (500) nach Anspruch 9, wobei ein Schritte zum Prüfen (630), Identifizieren (632) und Korrelieren (634) für mehrere Strukturen (140) durchgeführt werden und die Korrelationsergebnisse zu einer Korrelationsdatenbank (701) hinzugefügt werden.

11. Verfahren (500) nach Anspruch 9 oder 10, wobei das Prüfen (630) durch ein zerstörungsfreies Prüfungsverfahren durchgeführt wird, das zerstörungsfreie Prüfungsverfahren umfassend eines von:
Ultraschallprüfen, Magnetpartikelprüfen, computergestütztem tomographischem Prüfen, radiographischem Prüfen oder Wirbelstromprüfen.

12. Verfahren (500) nach einem der Ansprüche 1 bis 11, wobei die Betriebseigenschaft mindestens eines umfasst von:
Laserleistung, Lasergeschwindigkeit, Pulvergröße, Pulvermaterial, Kammertemperatur, Laserpunktgröße oder Pulvertiefe (420).

13. System (900) zum Kontrollieren von gefertigten 3D-Strukturen (140) oder Prozesssteuern einer 3D-Fertigungsvorrichtung (100), das System (900) umfassend:

einen Speicher (904); und
einen Prozessor (902) in Verbindung mit dem Speicher (904), wobei das System (900) konfiguriert ist, Folgendes durchzuführen:

Erhalten (510) mit einer topographischen Abtasteinrichtung (160) in Echtzeit während eines 3D-Fertigungsbauprozesses, in dem mindestens eine Struktur (140) durch die 3D-Fertigungsvorrichtung (100) gebaut wird, einer topographischen Abtastung eines Bereichs einer Bauplattform (112), auf der die mindestens eine Struktur (140) gebaut wird;
Auswerten (520), durch einen Prozessor (902), der topographischen Abtastung, um eine Pulvertiefe (420) oder eine Schichttiefe nach der Pulverumverteilung zu bestimmen;
Bestimmen (530), basierend auf dem Auswerten (520), ob die Pulvertiefe (420) oder die Schichttiefe entweder innerhalb oder außerhalb eines vorbestimmten Bereichs liegt;
Modifizieren (540), basierend auf dem Bestimmen (530), einer Betriebseigenschaft der 3D-Fertigungsvorrichtung (100);
Identifizieren (632) eines Fehlers in mindestens einer Struktur (140);
Korrelieren (634) des Fehlers mit der Pulverschicht oder der Schichttiefe;
Erzeugen oder Aktualisieren (636) eines statistischen Modells basierend auf der Korrelation; und
Erzeugen (720) des vorbestimmten Bereichs aus einer Verteilungsfunktion des statistischen Modells.

14. System (900) nach Anspruch 13, die topographische Abtasteinrichtung (160) umfassend:
eine Laserabtasteinrichtung, eine Blaulichtabtasteinrichtung, eine konfokale Abtasteinrichtung oder eine Multifokalebenenmikroskopieabtasteinrichtung (160).

15. System (900) nach Anspruch 13 oder 14, wobei die Betriebseigenschaft mindestens eines umfasst von:
Laserleistung, Lasergeschwindigkeit, Pulvergröße, Pulvermaterial, Kammertemperatur, Laserpunktgröße oder Pulvertiefe (420).

**Revendications**

1. Procédé (500) pour une inspection de structures fabriquées en 3D (140) ou une commande de processus d'un appareil de fabrication 3D (100), le procédé (500) comprenant :

l'obtention (510), en temps réel pendant un processus de construction de fabrication 3D dans lequel au moins une structure (140) est construite par l'appareil de fabrication 3D (100), d'un balayage topographique d'une zone d'une plateforme de construction (112) sur laquelle l'au moins une structure (140) est construite ;
l'évaluation (520), par un processeur (902), du balayage topographique pour déterminer une profondeur de poudre (420) ou une profondeur de couche après une redistribution de poudre (130) ;

le fait de déterminer (530), sur la base de l'évaluation (520), si la profondeur de poudre (420) ou la profondeur de couche se situe à l'intérieur ou à l'extérieur d'une plage prédéterminée ;

la modification (540), sur la base de la détermination (530), d'une caractéristique opérationnelle de l'appareil de fabrication 3D (100) ;

dans lequel le procédé comprend en outre :

l'identification (632) d'un défaut dans au moins une structure (140) ;

la corrélation (634) du défaut avec la couche de poudre ou la profondeur de couche ;

la génération ou la mise à jour (636) d'un modèle statistique (703) sur la base de la corrélation ; et

la génération de la plage prédéterminée à partir d'une fonction de distribution du modèle statistique.

2. Procédé (500) selon la revendication 1, dans lequel l'étape d'obtention (510) comprend en outre :
l'obtention du balayage topographique par l'un parmi un balayage laser, un balayage de lumière bleue, un balayage confocal ou un balayage par microscopie à plan multifocal (160).

3. Procédé (500) selon la revendication 2, dans lequel l'étape d'obtention (510) comprend en outre :

l'obtention d'un premier balayage topographique d'une surface de l'au moins une structure (140) ;

l'attente de la fin de la redistribution de poudre ; et

l'obtention d'un second balayage topographique de la plateforme de construction (112).

4. Procédé (500) selon la revendication 3, l'étape de détermination (530) comprenant : la détermination de la profondeur de poudre (420) en soustrayant une valeur du premier balayage topographique d'une valeur du second balayage topographique ; et

la répétition de la détermination de la profondeur de poudre (420) ou de l'étape de profondeur de couche pour de multiples emplacements sur la plateforme de construction (112).

5. Procédé (500) selon la revendication 4, comprenant en outre :
le stockage (610) de multiples valeurs de profondeur de poudre (420) ou de profondeur de couche pour de multiples emplacements X-Y sur la plateforme de construction (112) pour une couche unique.

6. Procédé (500) selon la revendication 5, dans lequel l'étape de stockage (610) est répétée pour de multiples couches.

7. Procédé (500) selon la revendication 6, dans lequel des données correspondant à de multiples valeurs de profondeur de poudre (420) dans de multiples emplacements X-Y pour de multiples couches sont combinées et stockées (620) dans une base de données (701).

8. Procédé (500) selon la revendication 7, dans lequel des données provenant de multiples structures (140) construites par l'appareil de fabrication 3D (100) sont ajoutées à la base de données (701).

9. Procédé (500) selon la revendication 1, comprenant en outre :

l'utilisation du modèle statistique pour identifier des emplacements au niveau desquels une profondeur de poudre ou une profondeur de couche est une valeur aberrante dans la fonction de distribution du modèle statistique ; et

le rejet (722) de la couche ou pièce si le nombre d'emplacements identifiés dans la couche ou la pièce dépasse un seuil statistique.

10. Procédé (500) selon la revendication 9, dans lequel l'essai (630), l'identification (632) et
la corrélation (634) des étapes sont effectués pour de multiples structures (140), et les résultats de corrélation sont ajoutés à une base de données de corrélation (701).

11. Procédé (500) selon la revendication 9 ou 10, l'essai (630) effectué par un procédé d'essai non destructif, le procédé d'essai non destructif comprenant l'un parmi :
essai aux ultrasons, contrôle magnétoscopique, contrôle par tomographie par ordinateur, contrôle radiographique, ou contrôle par courants de Foucault.

12. Procédé (500) selon l'une quelconque des revendications 1 à 11, dans lequel la caractéristique opérationnelle comprend au moins l'un parmi :

puissance de laser, vitesse de laser, taille de poudre, matériau de poudre, température de chambre, taille de tache laser, ou profondeur de poudre (420).

13. Système (900) pour une inspection de structures fabriquées en 3D (140) ou une commande de processus d'un appareil de fabrication 3D (100), le système (900) comprenant :

une mémoire (904) ; et

un processeur (902) en communication avec la mémoire (904), dans lequel le système (900) est configuré pour effectuer :

l'obtention (510), avec un dispositif de balayage topographique (160), en temps réel pendant un processus de construction de fabrication 3D dans lequel au moins une structure (140) est construite par l'appareil de fabrication 3D (100), d'un balayage topographique d'une zone d'une plateforme de construction (112) sur laquelle l'au moins une structure (140) est construite ;

l'évaluation (520), par un processeur (902), du balayage topographique pour déterminer une profondeur de poudre (420) ou une profondeur de couche après une redistribution de poudre ;

le fait de déterminer (530), sur la base de l'évaluation (520), si la profondeur de poudre (420) ou la profondeur de couche se situe à l'intérieur ou à l'extérieur d'une plage prédéterminée ;

la modification (540), sur la base de la détermination (530), d'une caractéristique opérationnelle de l'appareil de fabrication 3D (100) ;

l'identification (632) d'un défaut dans au moins une structure (140) ;

la corrélation (634) du défaut avec la couche de poudre ou la profondeur de couche ;

la génération ou la mise à jour (636) d'un modèle statistique sur la base de la corrélation ; et

la génération (720) de la plage prédéterminée à partir d'une fonction de distribution du modèle statistique.

14. Système (900) selon la revendication 13, le dispositif de balayage topographique (160) comprenant :

un dispositif de balayage laser, un dispositif de balayage de lumière bleue, un dispositif de balayage confocal ou un dispositif de balayage par microscopie à plan multifocal (160).

15. Système (900) selon la revendication 13 ou 14, dans lequel la caractéristique opérationnelle comprend au moins l'un parmi :

puissance de laser, vitesse de laser, taille de poudre, matériau de poudre, température de chambre, taille de tache laser, ou profondeur de poudre (420).

**FIG. 1**

FIG. 2

FIG. 3

FIG. 4

500

TOPOGRAPHICALLY SCAN PART LAYER AND POWDER LAYER TO OBTAIN PART LAYER HEIGHT AND POWDER DEPTH

510

EVALUATING STEP

520

DETERMINING STEP

530

YES

NO

MODIFYING OPERATIONAL CHARACTERISTIC

540

REPEAT

YES

NO

END

FIG. 5

FIG. 6

700

701 — CORRELATION DATABASE

| PHYSICAL MODEL | STATISTICAL MODEL |

702

703

IDENTIFY OUTLIERS FOR EACH LAYER AND LOCATION — 720

BASED ON PREDETERMINED THRESHOLD ACCEPT OR REJECT LAYER — 722

710 — CONTROL BUILD PROCESS BASED ON MODEL DATA

AFTER COMPLETE BUILD UPDATE MODELS — 730

RANDOM PART SELECTION FOR TEST — 740

<u>630</u>

FIG. 7

FIG. 8

900

DATA PROCESSING SYSTEM

904 → MEMORY

PROCESSOR(S) — 920

OPERATING SYSTEM — 905

COMPUTER PROGRAM(S)

906

902

910

I/O CONTROLLER(S)

908

NETWORK ADAPTER(S)

INPUT DEVICE

OUTPUT DEVICE

STORAGE

912

914

916

FIG. 9

FIG. 10

**EP 3 308 945 B1**

**Patent documents cited in the description**

- EP 2918395 A